# EUROPEAN PATENT SPECIFICATION

(11) **EP 1 757 515 B1**
(45) Date of publication and mention of the grant of the patent: **16.09.2009**
(21) Application number: 06119058.3
(22) Date of filing: 17.08.2006
(51) Int. Cl.: B62D 59/04, B60P 3/36

(54) **Drive roll and auxiliary drive means provided with a drive roll of this type**
Antriebsrolle und Hilfsantrieb mit einer solchen Rolle
Galet d'entraînement et moyen d'entraînement auxiliaire comprenant un tel galet

(30) Priority: 25.08.2005 NL 1029806
(43) Date of publication of application: 28.02.2007
(73) Proprietor: Reich KG, 35713 Eschenburg-Wissenbach (DE)
(72) Inventor: Bender, Steffen, D-35713, Eschenburg (DE)
(74) Representative: van Westenbrugge, Andries

(56) References cited:
- EP-A- 1 394 023
- FR-A- 1 031 098
- FR-A- 1 187 269
- FR-A- 2 791 113
- GB-A- 1 354 831

## Description

The present invention relates to a drive roll according to the preamble of Claim 1.

More particularly, the invention relates to a drive roll for an auxiliary drive means such as a caravan.

Nowadays, rolls made from steel, which are provided with a layer of grit, are used in this connection. Rolls of this type are pressed against the tyres of, for example, a caravan, allowing the caravan to be moved and manoeuvred over small distances with its own drive system. The use of a layer of grit has a number of drawbacks. A first drawback is that as a result of the fact that the tyre presses dirt into the gap between the roll and the tyre, this dirt becomes trapped in the pores between the layer of grit, from where it is difficult to remove it. This reduces the gripping engagement between the layer of grit and the tyre and, under unfavourable circumstances, slippage may occur. In order to prevent this, particularly high degrees of force are used for pressing the drive roll against the tyre, thus further mechanically loading the auxiliary drive means, so such means must be heavier in its construction.

Furthermore, the construction of a roll from two materials, being a support and a layer of grit in gripping engagement with the tyre, may present environmental problems during subsequent removal. It has also been found that it is not under all circumstances possible precisely to regulate the thickness of the layer of grit on the support. In addition, a roll of this type has a substantial weight, and this adversely affects the further facilities of the caravan or the towing vehicle, respectively, and the fuel consumption.

A trailer comprising an auxiliary drive means provided with a grooved roll is known from EP 1,394,023. A friction-promoting toothed surface 12 is provided on the grooves.

A drive means for a bicycle having an auxiliary motor is known from FR 1,187,269. FR 1,031,089 discloses an auxiliary drive means for a trailer, on which the preamble of claim 1 is based. A grooved auxiliary drive means is provided by GB 1,354,831.

The aim of the present invention is to provide an improved drive roll.

This aim is achieved by a drive roll having the features of Claim 1.

According to the present invention, the drive roll consists of alternating comparatively sharp cams and hollow, shallow first grooves adjacent thereto. The depths of these first grooves is preferably so low that, during the pressing of the cams into the tyre, the grooves enter into contact, with slight gripping engagement, with the tyre or are provided at such a short distance from said tyres during the driving gripping engagement of the drive rolls that any dirt which accumulates in the grooves is removed again as a result of the movement between the tyre and the comparatively shallow first grooves. In other words, the first grooves are self-cleaning as a result of their hollow, shallow shape.

According to the invention, further, second grooves are formed. These second grooves are comparatively deep and preferably also delimit the cams. In other words, each cam is delimited by, on the one hand, a shallow first groove and, on the other hand, a comparatively deep second groove. The second grooves have a depth which is at least one third the circumferential length thereof and, more particularly, approximately half of such length. The second grooves may have any adjustable shape. It is thus possible for the width of the second grooves to increase or decrease toward the base of the grooves.

More particularly, the maximum depth of the first grooves is less than one third the circumferential length thereof.

The first grooves may have any desired shape but, according to a first advantageous embodiment, the first grooves are arc of a circle-shaped. A circle of this type extends, in this regard, from the comparatively sharp cam to a low point. This shape further impedes the sticking of dirt and the cam has a distinctly sharp contour which may easily be brought into gripping engagement with the rubber surface of the tyre of a caravan or other trailer.

It will be understood that a gripping engagement of this type is fundamentally different from the gripping engagement of, for example, bicycle dynamos on bicycle tyres and drive rolls or light motorcycles. The tyres used in this connection are not suitable for cooperation with the above-described drive rolls having a comparatively sharp cam.

The above-described construction may easily be produced from any material such as a (light) metal. It is also possible to use plastics materials. A roll of this type may, for example, be produced by extrusion but also by (injection-) moulding. As a result of the use of suitable materials and the presence of the grooves, the weight of said roll may be kept low, while the production technology is able to ensure precise dimensioning without associated additional costs. The present invention allows the rolls to be produced from a single material, thus reducing the number of environmental problems during subsequent removal.

It has been found that the comparatively sharp cams do not damage vehicle tyres. Should a particularly high concentration of tension occur at any location, then it is possible for a portion of sharp cams of this type to break off. However, viewed in the length of the relevant cam, there is still sufficient surface area for gripping engagement with the tyre to ensure adequate drive.

As will be clear from the foregoing, the present invention also relates to an auxiliary drive means provided with the above-described drive roll and also to a trailer provided with an auxiliary drive means of this type.

The invention will be described hereinafter in greater detail with reference to an illustrative embodiment presented in the drawings, in which:
Figure 1 shows diagrammatically a caravan provided with an auxiliary drive means according to the invention;
Figure 2 shows the roll of the auxiliary drive means from Figure 1; and
Figure 3 is a cross section of detail III according to Figure 1.

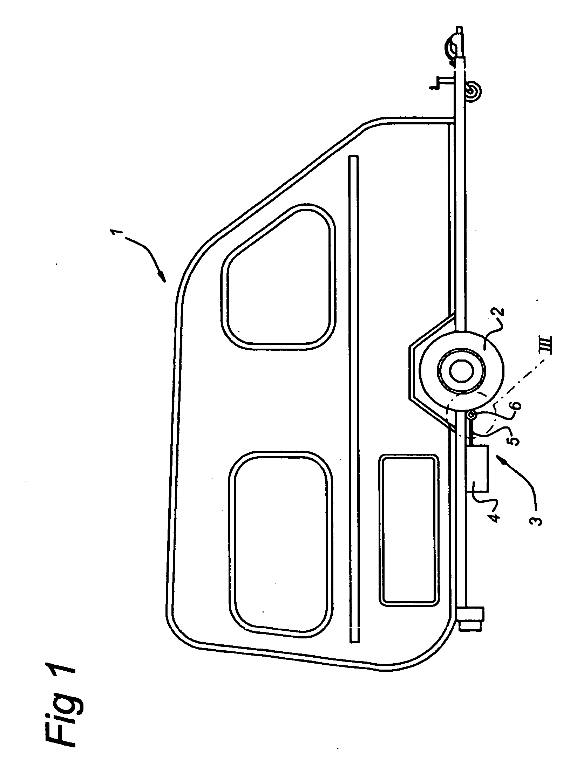

In Figure 1, reference numeral 1 denotes a caravan to be towed. It will be understood that the invention also applies to other trailers which have to be manoeuvred over a short distance. This caravan 1 is provided with a wheel 2 and an auxiliary drive means 3 located in proximity to the wheel 2. Th drive means may be provided on one or both sides. In the case of a vehicle having more than one axle, various auxiliary drive means may be provided on a common auxiliary drive means. The auxiliary drive means 3 consists of a diagrammatically illustrated motor 4 and a roll 6 driven by the electric motor 4. During use of the auxiliary drive means, this roll 6 is pressed against the tyre with the arm 5. If the auxiliary drive means is no longer necessary, the roll 6 is moved away from the tyre again. This may be done in a number of ways.

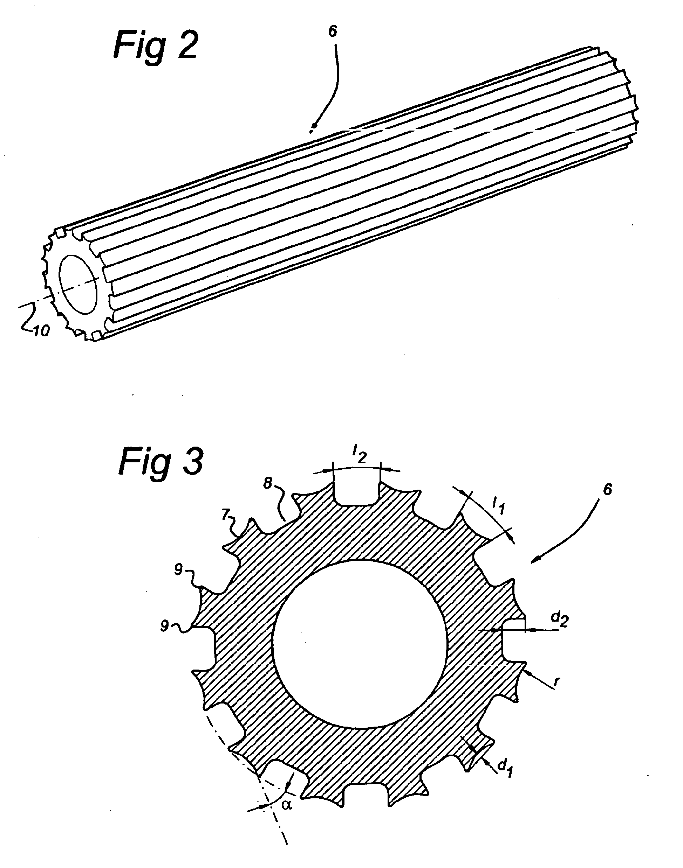

Figure 2 is a schematic, perspective view of the drive roll shown in Figure 1. Figure 3 is a cross section of this roll. The drive roll 6 is rotatable about an axis of rotation 9. The drive roll consists of the first shallow grooves 7 and second deep grooves 8. Pointed cams 9 are delimited therebetween. The shallow grooves 7 have a maximum depth d1 and a length 11. The hollowing-out of said shallow grooves extends in a circle having a radius r. The deep grooves have a length 12 and a depth d2.

This is embodied in such a way that the length of the shallow grooves 7 is at least three times greater than the depth d1 thereof. In the case of the deep grooves, the depth d2 is at least one third and, in particular, approximately half the length 12 of such grooves.

The following values are cited as an example: 11 and 12: 2 to 10 mm and, in particular, approximately 5 mm; d2 is preferably from 2 to 8 mm and, in particular, 4 mm. The radius r is preferably between 2 and 6 mm and is, in particular, approximately 4 mm.

It has been found that the present invention provides pointed cams 9. These cams are delimited by the end of the radius r of the circle and the comparatively steeply falling portion of the deep grooves 8. The side walls of the deep grooves 8 are substantially perpendicular to the circumference of the roll. The delimitation of the shallow groove forms an angle α of from 20 to 70° to the circumference of the roll at the location of the pointed cams.

It has been found that as a result of the particular shape of especially the shallow grooves, dirt accumulating therein is immediately removed on contact with the tyre. On contact with the tyre, the pointed cams 9 are pressed into the tyre over a small distance, as a result of which a portion of the shallow grooves 7 enters into slight gripping engagement with the tyre, which gripping engagement is just sufficient to remove such dirt. Both are promoted by the circular hollow shape of the first grooves 7. The second deeper grooves are formed mainly to reduce the weight.

The above-described drive roll may be made from any conceivable material. In addition, it is possible to take particular measures at a location in the length of the drive roll to provide transmission with the drive motor. In other words, there may be provided an arbitrarily shaped toothed portion with which a gear-wheel, chain or belt may enter into gripping engagement.

Although the invention has been described above with reference to an advantageous embodiment, it will be immediately clear to a person skilled in the art that variations are possible. Such variations are within the scope of the appended claims.

## Claims

1. Drive roll (6) of an auxiliary drive means (3) comprising an axis of rotation (10), which drive roll is configured to be pressed against a tyre (2), the gripping engagement surface of said drive roll comprising a multiplicity of cams (9) extending substantially parallel to said axis of rotation wherein each cam is delimited between a first groove (7) and a second groove (8) extending substantially parallel to said axis of rotation, said cams comprising a sharp gripping engagement point **characterised in that** said first grooves (7) are hollow, shallow and formed adjacent to each of said cams and **in that** said second grooves (8) are deep and are formed adjacent to said cams (9).

2. Drive roll according to Claim 1, wherein the depth (d1) of said first grooves is less than one third the circumferential length (11) of said first grooves.

3. Drive roll according to one of the preceding claims, wherein the first grooves are arc of a circle-shaped (r).

4. Drive roll according to one of the preceding claims, wherein the depth (d2) of said second grooves is at least one third the circumferential length (12) thereof.

5. Drive roll according to one of the preceding claims, wherein said rolls comprise metal.

6. Drive roll according to one of the preceding claims, provided with a roughened portion.

7. Auxiliary drive means (3) for a trailer, such as a caravan (1), comprising a motor (4), a drive roll (6) driven thereby and displacement means for pressing said drive roll against a wheel, **characterised in that** said drive roll comprises a drive roll according to one of the preceding claims.

## Patentansprüche

1. Antriebswalze (6) eines Hilfsantriebsmittels (3) mit einer Drehachse (10), wobei die Antriebswalze so ausgelegt ist, dass sie gegen einen Reifen (2) gepresst wird, wobei die Eingriffsoberfläche der Antriebswalze eine Vielzahl von Nocken (9) umfasst, die sich im Wesentlichen parallel zu der Drehachse erstrecken, wobei jeder Nocken zwischen einer ersten Nut (7) und einer zweiten Nut (8) begrenzt ist, die sich im Wesentlichen parallel zur Drehachse erstrecken, wobei die Nocken einen spitzen Eingriffspunkt umfassen, **dadurch gekennzeichnet, dass** die ersten Nuten (7) hohl, flach und benachbart zu jedem der Nocken ausgebildet sind und dass die zweiten Nuten (8) tief sind und benachbart zu den Nocken (9) ausgebildet sind.

2. Antriebswalze nach Anspruch 1, wobei die Tiefe (d1) der ersten Nuten geringer als ein Drittel der Umfangslänge (11) der ersten Nuten ist.

3. Antriebswalze nach einem der vorangehenden Ansprüche, wobei die ersten Nuten kreisbogenförmig (r) sind.

4. Antriebswalze nach einem der vorangehenden Ansprüche, wobei die Tiefe (d2) der zweiten Nuten mindestens ein Drittel von deren Umfangslänge (12) ist.

5. Antriebswalze nach einem der vorangehenden Ansprüche, wobei die Walzen Metall umfassen.

6. Antriebswalze nach einem der vorangehenden Ansprüche, die mit einem aufgerauten Abschnitt versehen ist.

7. Hilfsantriebsmittel (3) für einen Anhänger wie z.B. einen Wohnwagen (1) mit einem Motor (4), einer **dadurch** angetriebenen Antriebswalze (6) und Verschiebungsmitteln zum Pressen der Antriebswalze gegen ein Rad, **dadurch gekennzeichnet, dass** die Antriebswalze eine Antriebswalze nach einem der vorangehenden Ansprüche umfasst.

## Revendications

1. Galet d'entraînement (6) d'un moyen d'entraînement auxiliaire (3) comprenant un axe de rotation (10), lequel galet d'entraînement est configuré pour être comprimé contre un pneu (2), la surface d'entrée en prise dudit galet d'entraînement comprenant une multiplicité de cames (9) s'étendant de façon sensiblement parallèle audit axe de rotation, dans lequel chaque came est délimitée entre une première rainure (7) et une seconde rainure (8) s'étendant de façon sensiblement parallèle audit axe de rotation, lesdites cames comprenant un point d'entrée en prise aigu, **caractérisé en ce que** lesdites premières rainures (7) sont creuses, peu profondes et formées de façon adjacente à chacune desdites cames et **en ce que** lesdites secondes rainures (8) sont profondes et sont formées de façon adjacente auxdites cames (9).

2. Galet d'entraînement selon la revendication 1, dans lequel la profondeur (d1) desdites premières rainures est inférieure à un tiers de la longueur circonférentielle (11) desdites premières rainures.

3. Galet d'entraînement selon une des revendications précédentes, dans lequel les premières rainures présentent une forme d'arc de cercle (r).

4. Galet d'entraînement selon une des revendications précédentes, dans lequel la profondeur (d2) desdites secondes rainures est au moins un tiers de leur longueur circonférentielle (12).

5. Galet d'entraînement selon une des revendications précédentes, dans lequel lesdits galets comprennent du métal.

6. Galet d'entraînement selon une des revendications précédentes, pourvu d'une partie rugosifiée.

7. Moyen d'entraînement auxiliaire (3) pour une remorque, telle qu'une caravane (1), comprenant un moteur (4), un galet d'entraînement (6) entraîné par celui-ci et des moyens de déplacement destinés à comprimer ledit galet d'entraînement contre une roue, **caractérisée en ce que** ledit galet d'entraînement comprend un galet d'entraînement selon une des revendications précédentes.
